# EUROPEAN PATENT SPECIFICATION

(11) **EP 1 018 614 B1**
(45) Date of publication and mention of the grant of the patent: **08.09.2004**
(21) Application number: 99500250.8
(22) Date of filing: 23.12.1999
(51) Int. Cl.: F16K 5/04

(54) **Plug valve**
Hahn
Robinet tournant

(30) Priority: 08.01.1999 ES 9900030
(43) Date of publication of application: 12.07.2000
(73) Proprietor: Genebre, S.A., 08908 l'Hospitalet de Llobregat (Barcelona) (ES)
(72) Inventor: Monterde Fabregat, Luis, c/o Genebre, S.A., 08908 L'Hospitalet de Llobregat (ES)
(74) Representative: Pastells Teixido, Manuel

(56) References cited:
- CH-A- 629 579
- DE-A- 4 210 973
- US-A- 2 547 116
- US-A- 3 814 378
- US-A- 3 874 637
- US-A- 4 275 868
- US-A- 4 365 366
- US-A- 4 655 252
- US-A- 4 722 794

## Description

The present invention refers to a valve for fluids.

Valves for fluids are known particularly for the control of the water passage as preferentially used in the sanitary facilities, said valves comprising a tubular body with a radial branch, a control spindle being axially housed in said tubular body and having a generally spherical region facing said branch and an angular passage, said control spindle when being turned providing the passage or the obstruction of the fluid towards said branch, a cylindric seal fitted to the inner opening of the branch acting against said spherical region

Valves are also known in which the seal consists of two O-rings joined together with similar O-shaped lengths which are coupled to the grooves on the control spindle, as described in US patent 2547116.

In addition to this, valves are also known which are fitted with a filter inside the control spindle.

It is the object of this invention to improve this type of valves so that they guarantee a fully tight sealing between said spindle and the tubular body both in the open and closed positions of the valve.

At certain very high pressures of the fluid, this latter when directly and longitudinally acting on the composite seal due to the aforementioned arrangement of the control spindle in the tubular body causes the portions of said seal to bend upon themselves, this allowing the fluid to leak.

In order to obviate this drawback by preventing any fluid leaks through the valve regardless of the pressure of said fluid when flowing through said valve, the control spindle with the composite seal fitted to it is arranged in such a way that it is axially housed in the radial or diametral branch, this latter being extended at the rear on the tubular body thus closing it and having a passage through which said body communicates with the control spindle, this latter thus transversally facing said tubular body whereby the composite seal does not longitudinally and directly receive the thrust of the fluid, said thrust having thus been deadened when reaching said seal.

In this arrangement the control handle governing the control spindle is formed by a radial arm of said control handle projecting to the outside of the valve through a transversal opening provided in the radial or diametral branch of the tubular body, the filter being made up by a cup fixed to a spindle supported on a plug which closes the rear opening of the diametrical branch.

These and other characteristics will be best made apparent by the following detailed description whose understanding will be made easier by the accompanying three sheets of drawings showing two practical embodiments cited only by way of an example not limiting the scope of the present invention.

In the drawings:
Fig. 1 illustrates in a longitudinal section a valve which is not part of the invention with the external control handle press-fitted to the control spindle;
Figs. 2 and 3 are each a sectional view of the valve as per line A-A of Fig. 1 showing the control spindle in the open and closed position of the valve, respectively;
Fig. 4 is a perspective view of the composite seal;
Fig. 5 is a side elevation of a control spindle which is not part of the invention;
Fig. 6 shows in a longitudinal section a valve which is not part of the invention with the external control handle fitted by means of a screw to the control spindle;
Fig. 7 illustrates in a longitudinal section a of the valve according to the invention which has been improved for high fluid pressures;
Figs. 8 and 9 are each a sectional view of the valve as per line B-B of Fig. 7 showing the control spindle in the open and closed position of the valve, respectively;
Fig. 10 illustrates in a longitudinal section a detail of this valve showing the control spindle with no filter;
Fig. 11 is a side elevation of the control spindle with the composite seal fitted to it, and
Fig. 12 shows a cross-sectional view of said control spindle as per section line C-C in Fig. 11.

According to the drawings this valve for fluids comprises a tubular body 1 innerly having three diameters 2, 3 and 4 and radially comprising an also tubular branch 5 with which it communicates through an orifice 6 of the wall of said tubular body.

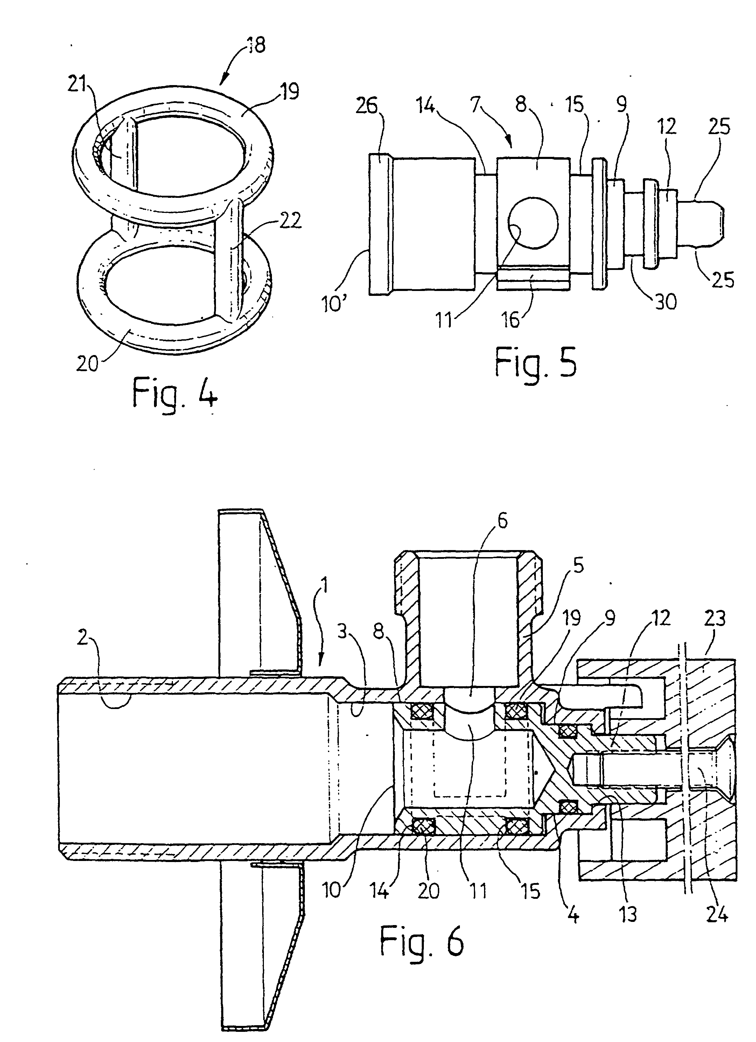

Axially fitted in this tubular body is control spindle 7 (Fig. 5) exteriorly having two diameters 8 and 9, said control spindle being hollow and having an opening 10 at its rear end and an orifice 11 in its wall, whereas at the front end it ends in a gudgeon 12 projecting through an orifice 13 of the front end of tubular body 1.

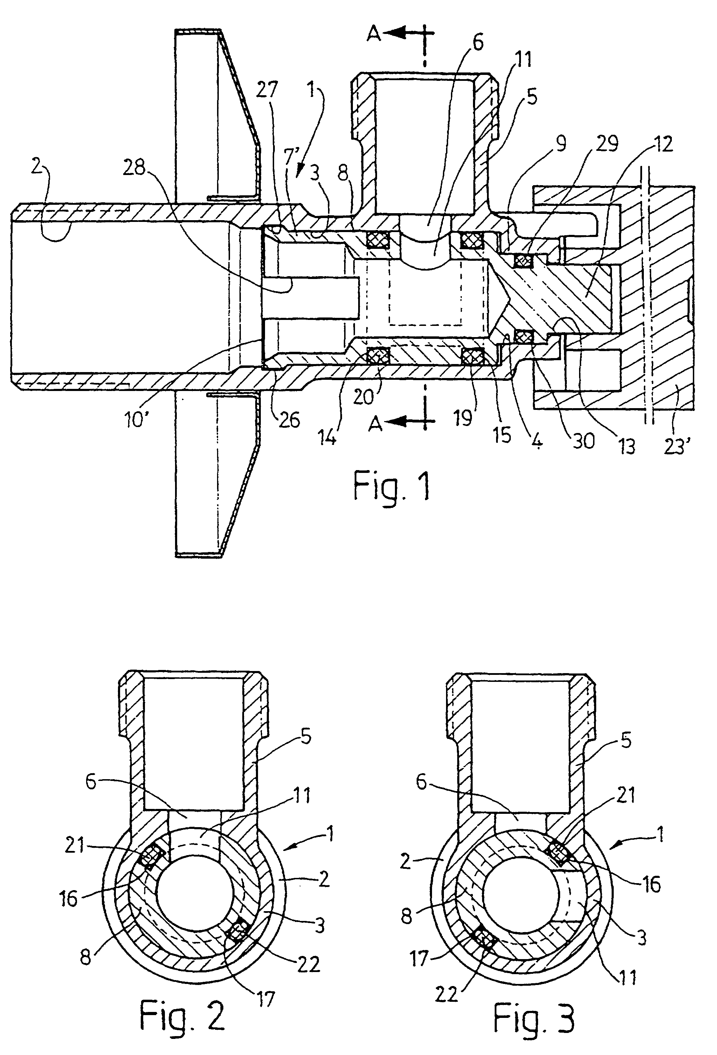

The diametral region 8 of the control spindle has two peripheral grooves 14 and 15 connected to each other by another two diametrically opposed grooves 16 and 17 (Figs. 2 and 3), into said grooves being fitted a composite seal 18 (Fig. 4) formed by two O-rings 19 and 20 that are connected to each other by two also O-shaped, diametrically opposed lengths 21 and 22.

To the end gudgeon 12 of the control spindle an external control handle 23 is fitted by means of an axial screw 24 (Fig. 6), or else an external control handle 23' is press-fitted (Fig. 1), in which case said gudgeon will be laterally provided with transversal ribs 25.

From the above description it will be appreciated that the O-rings 19 and 20 will obstruct the coaxial passage of the fluid in the longitudinal direction, and the O-shaped lengths 21 and 22 will obstruct the passage of the fluid in a peripheral, i.e. transversal direction, between the control spindle 7 and the tubular body 1.

In the case where the control handle 23' is axially press-fitted, the control spindle 7, in order to achieve its coaxial stability within the tubular body 1, will have its rear opening 10' in an extended length 7' of said spindle (Fig. 1) forming at its periphery a salient 26 that fits into a circular groove 27 of the inner wall of the tubular body 1, said extension of the control spindle 7 having two longitudinal, mutually opposed end notches 28 that provide said length 7' with a certain resiliency in order to facilitate the fitting of the salient 26 into said groove 27.

The valve comprises another O-ring seal 29 fitted into an annular groove 30 of the control spindle 7 in its diametral region 9.

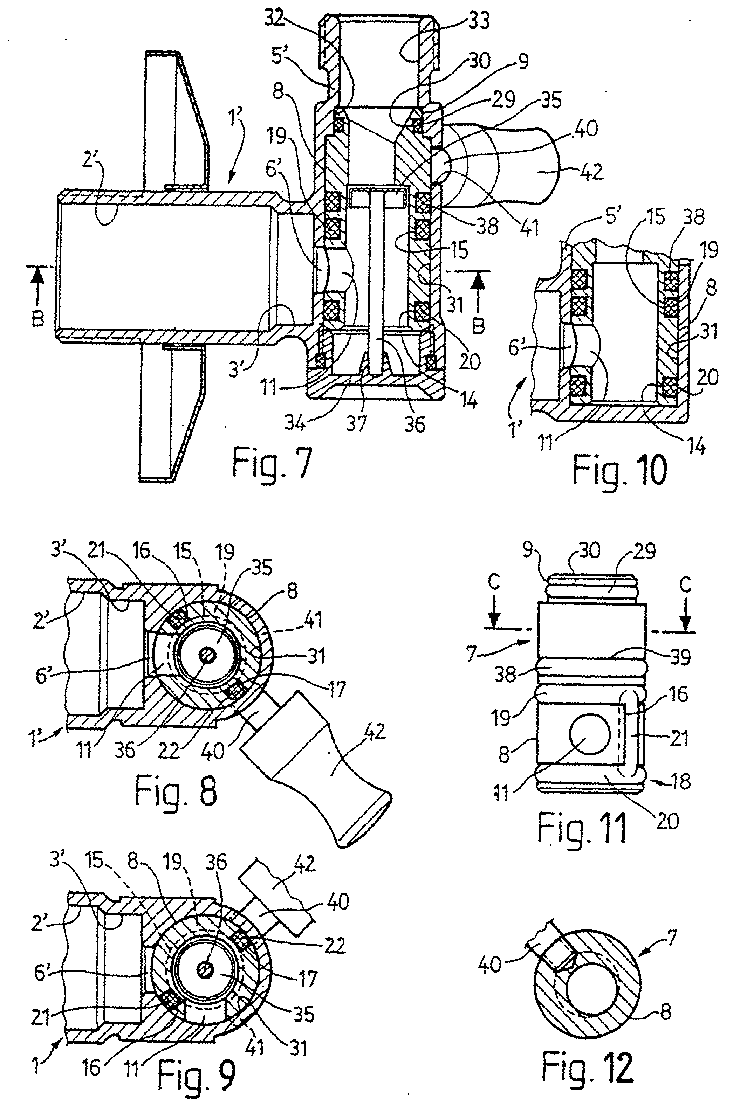

According to the invention in Figs. 7 through 12 the valve for fluids comprises a tubular body 1' innerly having two diameters 2' and 3' and at the end corresponding to the second of said diameters diametrically comprising an also tubular branch 5' being extended at the rear on the body 1' thus closing it and communicating with it through an orifice 6' of said branch.

This diametral branch 5' does innerly have three diameters 31, 32 and 33 and arranged between the two latter the axial seat provided in it for the control spindle 7, this latter being hollow and open at both ends and having two outer diameters 8 and 9 for said arrangement in branch 5', and also the orifice 11 in its wall to allow the fluid to pass from the body 1' to the branch 5' when said orifice 11 is aligned with the orifice 6' in virtue of an actuation on the control spindle 7.

The rear end of said branch 5' can be blind (see Fig. 10) or else it can be closed with a removable plug 34 (see Fig. 7) if the valve comprises a filter that can consist of a cap 35 arranged inside the control spindle 7 and fixed at its inner side onto an end of a shaft 36 which at the other end fits into a blind hole 37 of said removable plug 34.

The diametral region 8 of the control spindle has the two peripheral grooves 14 and 15 connected to each other with the other two diametrically opposed grooves 16 and 17 (Figs. 8 and 9), into said grooves being fitted the composite seal 18 (Fig. 11) formed by the two O-rings 19 and 20 connected to each other by two also O-shaped, diametrically opposed lengths 21 and 22.

The control spindle 7 comprises as well, besides the O-ring seal 29 housed in an annular groove 30 of its diametral region 9, another safety seal 38 that is also an O-ring seal and is also housed in an annular groove 39 that is nevertheless provided in the diametral region 8 and is arranged on top of the set of grooves into which is fitted the composite seal 8.

To the front portion of the control spindle 7 is attached a radial arm 40 which projects through a transversal opening of the branch 5 and ends in a handle 42 through which the control spindle 7 will be governed by means of turning it to thus close or open the fluid passage through the valve without the fluid pressure affecting the composite seal 18 due to the already described particular arrangement of the above-mentioned control spindle to which said handle is attached.

## Claims

1. A valve for fluids comprising a tubular body (1) with a radial branch (5), a control spindle (7) being operable in said tubular body and being provided with an external control handle (23), said control spindle (7) having two peripheral grooves (14 and 15) being connected to each other by another two diametrically opposed grooves (16 and 17), a seal (18) being fitted into said four grooves and being formed by two O-rings (19 and 20) that are connected to each other by two also O-shaped lengths (21, 22); whereby the control spindle (7) is housed in a diametral, transversal branch (5') of the tubular body (1'), **characterised in that** a filter (35) installed inside the control spindle (7) forms a cap being secured to a shaft (36) being supported by a plug (34) closing the rear opening of the diametral branch (5'), the opposite end of said diametral branch of the tubular body (1') having a transversal opening (41) with respect to the axis of the control spindle through which a radial arm (40) projects, this latter constituting the external control handle (42) governing the control spindle (7).

2. A valve for fluids as per claim 1, **characterised in that** the control spindle (7) is longitudinally fitted in the tubular body (1) and is axially retained therein by virtue of the fact that a peripheral end salient (26) fits into an inner, circular groove (27) of said tubular body (1), said control spindle (7) at said end having longitudinal notches (28) that provide it with the appropriate resiliency allowing to obtain said fitting.

## Patentansprüche

1. Flüssigkeitsventil das einen eine radiale Abzweigung (5) aufweisenden, rohrförmigen Körper (1) umfaßt, wobei eine Steuerspindel (7) sich im obengenannten rohrförmigen Körper betätigen läßt und mit einem äusseren Bedienungsgriff (23) versehen ist, die obengenannte Steuerspindel (7) zwei durch zwei zusätzlichen, diametral gegenüberliegenden Nuten (16 und 17) miteinander verbundenen, umlaufenden Nuten (14 und 15) aufweist, eine in den vier obengenannten Nuten eingesetzte Dichtung (18) von zwei durch zwei auch rundschnurförmigen, geraden Abschnitte (21, 22) miteinander verbundenen Rundschnurdichtringen (19 und 20) gebildet ist und die Steuerspindel (7) in einer diametralen Querabzweigung (5') des rohrförmigen Körpers (1') gelagert ist; **dadurch gekennzeichnet, daß** ein innerhalb der Steuerspindel (7) angeordnetes Filter (35) einen Becher bildet der zu einem Schaft (36) befestigt ist der auf einem die hintere Öffnung der diametralen Abzweigung (5') abschließenden Stopfen (34) abgestützt ist, wobei der gegenüberliegende Endbereich der obengenannten diametralen Abzweigung des rohrförmigen Körpers (1') eine in bezug auf die Achse der Steuerspindel querverlaufende Öffnung (41) aufweist durch welche ein Radialarm (40) hindurchragt, der den die Steuerspindel betätigenden Bedienungsgriff (42) bildet.

2. Flüssigkeitsventil nach Anspruch 1, **dadurch gekennzeichnet, daß** die Steuerspindel (7) im rohrförmigen Körper (1) in einer längsliegenden Anordnung installiert und dort durch Einschnappen eines umlaufenden, endseitigen Vorsprungs (26) in eine kreisförmig gestaltete, innere Nut (27) des obengenannten rohrförmigen Körpers (1) axial gehalten ist, wobei die Steuerspindel (7) in der genannten Endseite mit längslaufenden, ihm die zur Erzeugung des besagten Einschnappens geeignete Nachgiebigkeit verleihenden Einschnitten (28) versehen ist.

## Revendications

1. Vanne pour fluides comportant un corps tubulaire (1) à dérivation radiale (5) dans lequel agit un axe de contrôle (7) muni d'une commande extérieure (23), cet axe de contrôle (7) présentant deux rainures périphériques (14 et 15) entrelacées avec deux autres rainures (16 et 17) diamétralement opposées, un joint (18) constitué par deux bagues toriques (19 et 20) unies entre elles par deux tronçons (21, 22) également toriques s'accouplant sur ces quatre rainures, l'axe de contrôle (7) étant logé dans une dérivation transversale diamétrale (5') du corps tubulaire (1'), **caractérisée par le fait qu'**un filtre (35) installé à l'intérieur de l'axe de contrôle (7) forme un godet fixé à un axe (36) soutenu par le bouchon (34) qui ferme la bouche arrière de la dérivation diamétrale (5'), l'extrémité opposée de cette dérivation diamétrale du corps tubulaire (1') présentant une ouverture (41) transversale par rapport à l'axe géométrique de l'axe de contrôle, par laquelle sort le bras radial (40) qui constitue la commande extérieure (42) qui agit sur l'axe de contrôle (7).

2. Vanne pour fluides, d'après la revendication 1, **caracterisée en ce que** l'axe de contrôle (7) est installé longitudinalement dans le corps tubulaire (1) où il reste axialement retenu par l'emboîtement d'un collet périphérique extrême (26) dans une rainure circulaire interne (27) dudit corps tubulaire (1), l'axe de contrôle (7) ayant à ladite extrêmité des entaillures longitudinales (28) qui lui confèrent l'élasticité appropriée pour obtenir ledit emboîtement.
